# EUROPEAN PATENT SPECIFICATION

(11) **EP 2 121 807 B1**
(45) Date of publication and mention of the grant of the patent: **26.05.2010**
(21) Application number: 08707985.1
(22) Date of filing: 18.01.2008
(51) Int. Cl.: C08G 75/00

(54) **THIIRANE-TERMINATED POLYSULFIDE POLYMERS**
THIIRAN-TERMINIERTE POLYSULFIDPOLYMERE
POLYMÈRES POLYSULFURES À TERMINAISON THIIRANE

(30) Priority: 23.01.2007 EP 07101024; 02.02.2007 US 899273 P
(43) Date of publication of application: 25.11.2009
(73) Proprietor: Akzo Nobel N.V., 6824 BM Arnhem (NL)
(72) Inventor: WITZEL, Silke, D-42103 Wuppertal (DE); KOTTNER, Nils, D-78628 Rottweil (DE); ZEITLER, Michael, D-53347 Alfter (DE)
(74) Representative: Schalkwijk, Pieter Cornelis
(86) International application number: PCT/EP2008/050540
(87) International publication number: WO 2008/090086

(56) References cited:
- WO-A-03/076487
- WO-A1-2004/099283
- JP-A- 2004 062 057
- US-A- 5 173 549

## Description

The present invention relates to a novel group of functional group-terminated polysulfide polymers in which the terminating group is a thiirane (episulfide) group, to compositions comprising such thiirane-functional polysulfide polymers and epoxidized polysulfide polymers, to a process to prepare these novel compounds and compositions, and the use thereof.

Epoxy-functional polysulfide polymers are known from the July 2003 Thioplast^{™} EPS brochure of Thioplast Chemicals GmbH&Co KG (which can be found on www.thioplast.com), WO 03/076487, and WO 2004/099283, which disclose epoxy-terminated polysulfide polymers of the formula 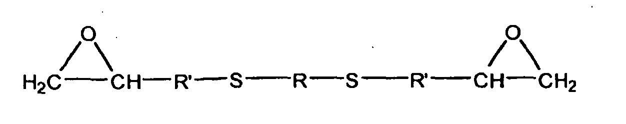 wherein R = the polysulfide polymer structure -(CH₂CH₂OCH₂OCH₂CH₂-SS)ₙ-CH₂CH₂OCH₂OCH₂CH₂-, n = 8-20, and R' = CH₂ or DGEB A/F (diglycidyl ether of bisphenol A or F). They also disclose the uses of such epoxy-terminated polysulfide polymers in a coating, sealant, adhesive and/or paint composition.

JP 0797556A discloses an adhesive composition containing a polysulfide-modified epoxy resin of the formula 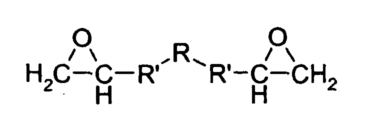 wherein R' is an organic group containing a bisphenol backbone and R is a polysulfide backbone of the formula -(CH₂CH₂OCH₂OCH₂CH₂-Sₘ)ₙ-, wherein m is 1-3 and n is 1-50. The other component of the adhesive is a triazine amine.

Epoxidized polysulfide polymers are polymers that can be suitably used as a binder in coatings, sealants, and adhesives. They are characterized by such properties as the ability to cure at ambient temperature, good adhesion to different substrates, an adjustable flexibility, a high impact resistance, high corrosion stability, a good chemical resistance to a number of diluted acids, alkalis, and organic solvents, and efficient repair. They can be combined with a wide range of curing agents such as aliphatic and aromatic (poly)amines, (poly)amides, (poly)thiols, and hydroxyl-containing resins such as phenolic resins, polycarboxylic acids and anhydrides, optionally in the presence of a catalyst. Until now, different epoxidized polysulfide polymers with a different viscosity have been prepared, i.e. to a certain extent they can be tailor-made for different applications.

However, epoxy-functional polysulfide polymers (EPS) suffer from a number of drawbacks. Their reactivity to amine curing compounds and their thermal stability are both subject to improvement. Some of the epoxy-functional polysulfide polymers characterized by an aliphatic polymer backbone in particular have a relatively low reactivity to a number of curing agents.

Accordingly, there is a need in the art for epoxidized polysulfides that do not suffer from the above-indicated drawbacks. More specifically, there is a desire for polysulfide polymers with a good balance between a sufficiently low viscosity and a sufficiently high reactivity towards curing agents. Also, there is a desire for polysulfide polymers with improved thermal stability.

The present invention now provides thiirane-functional polysulfide polymers of the formula 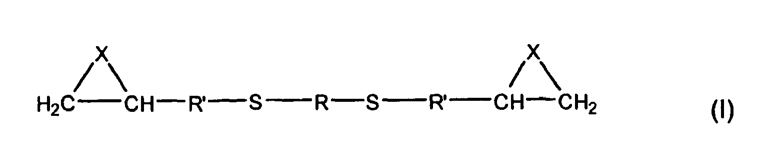 wherein R = the polysulfide polymer structure -(CH₂CH₂OCH₂OCH₂CH₂-SS)ₙ-CH₂CH₂OCH_{2O}CH₂CH₂-, n = 8-20, R' = CH₂ or DGEB A/F (diglycidyl ether of bisphenol A or F), X is O or S, with the proviso that at least one X is S.

Further, the present invention provides compositions comprising the above thiirane-functional polysulfide polymer and the corresponding epoxy-functional polysulfide polymer of formula (I), wherein X = O.

As demonstrated by the examples, the thiirane-terminated polysulfide polymers of the present invention have an improved reactivity to curing agents and a better thermal stability compared to the epoxidized polysulfide polymers of the state of the art, while they do not show any deterioration of the other desired properties, such as the mechanical properties, manifested by the state of the art epoxidized polysulfide polymers.

Chino et al., "Novel Rapid-Cure Adhesives for Low-Temperature Using Thiirane Compound" (Journal of Applied Polymer Chemistry, Vol. 81, pp. 2953-2957, 2001) disclose the synthesis of bisphenol F thiirane and bisphenol A thiirane and the use of these compounds in an adhesive. Neither thiirane compound contains a polysulfide polymer backbone. They can be prepared by reacting the corresponding epoxy resin with potassium thiocyanate or thiourea in a polar solvent. The resulting compound, bisphenol F thiirane, is said to be partly thiirane- and partly epoxide-terminated. When used in a curable (adhesive) composition with an amine hardener, their curing is said to be faster than that of the corresponding epoxides and their storage stability is said to improve. However, Chino *et al*. neither suggest the improved thermal stability of the thiirane compounds compared to the epoxy-functional compounds, nor do they offer any disclosure of a good balance between viscosity and curing agent reactivity.

The thiirane-functional polysulfide polymer (TPS) of the invention can be prepared by a process wherein the corresponding epoxy-functional compound is reacted with thiourea or a thiocyanate ion-providing compound in the presence of a catalyst and a solvent for 2 to 15 hours at an elevated temperature.

The thiocyanate ion-providing compound can be an inorganic thiocyanate, for instance a thiocyanate salt (e.g. ammonium thiocyanate, potassium thiocyanate or sodium thiocyanate), or an ion exchange resin or silica gel containing thiocyanate ions. These last two have the benefit of the reaction mixture being easier to purify, as they can be separated off by a simple filtration. However, the best yields are found using thiocyanate salts. Preferably, ammonium thiocyanate is used.

The catalyst can be selected from the group of organic acids such as oxalic acid or acetic acid, and derivatives thereof such as their hydrated salts or anhydrides. Preferably, the catalyst is oxalic acid.

The solvent can be an organic solvent selected from the group of C₁-C₄ alkanols, C₁-C₄ dialkyl ketones, halogenated C₁-C₄ alkanes, and C₁-C₄ nitriles. Preferably, the solvent is selected from the group of acetonitrile, methanol, ethanol, dichloromethane, acetone, methylethyl ketone, methylbutyl ketone. Most preferred is acetonitrile.

By elevated temperature is meant a temperature between room temperature and the boiling point of the used organic solvent. Preferably, the reaction is performed under reflux conditions.

As demonstrated by elemental, NMR, and GPC analysis, actually a mixture of both the epoxy-functional and the thiirane-functional polysulfide compound results (hereinafter also referred to as TPS mixture), which compounds can be separated by separation methods known to the skilled person, for example by HPLC.

Adhesion tests performed with mixtures of TPS and epoxidized polymers, such as bisphenol A and EPS, prove the improved adhesive properties of the TPS polymer.

The TPS polymer or TPS mixture may be used as a binder in a coating, sealant or adhesive composition.

Accordingly, the present invention also provides a coating, adhesive or sealant composition comprising the above thiirane-functional polysulfide polymer, optionally an epoxy-functional polysulfide polymer, and a curing agent selected from the group of (poly)amines, (poly)amides, (poly)thiols, (poly)alcohols, and mixtures thereof.

It should be noted that for the purposes of this application the term hardener is considered to be a synonym for the term curing agent.

In one embodiment, the compositions of thiirane-functional polysulfide polymer and epoxide-functional polysulfide polymer have a weight ratio of these two compounds of between 4:1 and 1:4. Preferably, the weight ratio of thiirane-functional polysulfide polymer to epoxide-functional polysulfide polymer is between 3:1 and 1:1.

In one embodiment, the coating, sealant or adhesive composition of the invention further comprises bisphenol A/F resin.

In the coating, adhesive or sealant compositions of the invention, the amount of curing agent is chosen such that the molar ratio of reactive protons (i.e. the protons on the amine-, amide-, thiol-, or alcohol-functional group of the curing agent) to the total number of epoxide- and thiirane-functional groups of the polysulfide polymer resins is between 2:1 and 1:2, preferably about equimolar.

### Examples

### Preparation Examples 1a and 1b

Acetonitrile, oxalic acid, and ammonium thiocyanate were supplied by Aldrich.

### 1a - Synthesis of thiirane-terminated polysulfides (TPS) with 45% thiirane termination

250 g Thioplast EPS 25 (an aliphatic epoxidized polysulfide polymer, ex Thioplast Chemicals GmbH und Co, hereinafter also referred to as "EPS 25") were dissolved in 2 l acetonitrile with great agitation. Next, 63.5 g ammonium thiocyanate and 7.5 g oxalic acid were added and the reaction mixture was vigorously stirred for 5 hours under reflux conditions. Afterwards the solvent mixture was removed via vacuum and the residue was dissolved in 1 I chloroform and washed four times with 1.7 l water, respectively. Following that the chloroform solution was dried over sodium sulfate and evaporated to give 220 g of a reddish polymer. Acetonitrile is ready for reuse after distillation. Elemental analysis determined a polymer with 45% thiirane termination.

### 1b - Synthesis of thiirane-terminated polysulfides (TPS) with 70% thiirane termination

800 g EPS 25, an aliphatic epoxidized polysulfide polymer, were dissolved in 6.7 l acetonitrile with great agitation. Next, 24 g oxalic acid and 203 g ammonium thiocyanate were added and the reaction mixture was vigorously stirred for 15 hours under reflux conditions. Afterwards acetonitrile was removed via vacuum and the residue was dissolved in 3 l chloroform and washed four times with 5 l water, respectively. Following that the chloroform solution was dried over sodium sulfate and evaporated to give 700 g of a reddish polymer with 70% sulfur content. Acetonitrile is ready for reuse after distillation. Elemental analysis determined a polymer with 70% thiirane termination.

### (Application) Example 2 - Adhesion Tests

For the tests three different formulations were developed and used. Concrete, aluminium, stainless steel, and steel were used as substrates. Table 1 gives information regarding the used formulations. In all formulations the TPS polymer mixture presented in Example 1 b was used.

**Table 1**

| | |
|---|---|
| Formulation A | 50 wt% TPS mixture, 50 wt% DGEBA resin (Epilox A 19-00, Leuna Harze) |
| Formulation B | 50 wt% TPS mixture, 50 wt% EPS 70 resin (aromatic EPS resin; Thioplast Chemicals) |
| Formulation C | 50 wt% TPS mixture, 50 wt% EPS 350 resin (aromatic EPS resin; Thioplast Chemicals) |

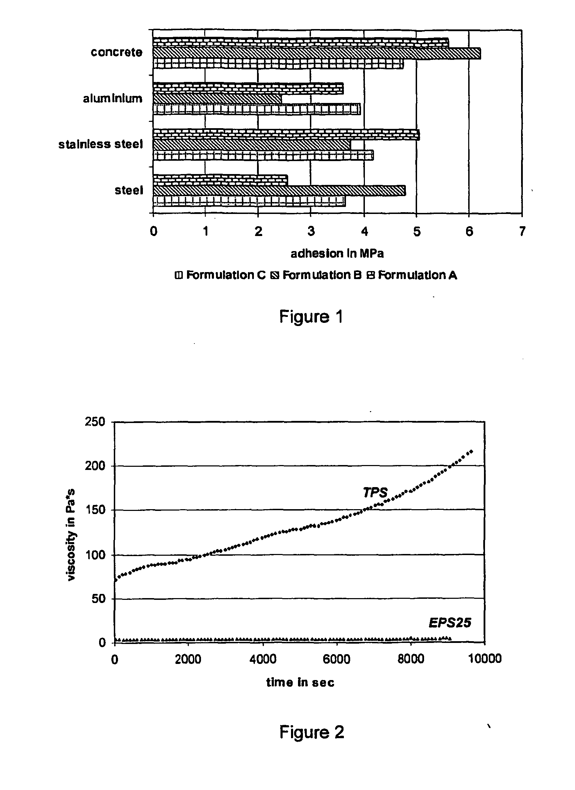

The formulations further contained filler, pigment, and a diluent where necessary. Polypox H503 was used as curing agent. The adhesion was tested on an Insistron Model 4467 of the Insistron Company in accordance with DIN ISO 4624. The results are represented in Figure 1.

Example 2 demonstrates the good adhesion of compositions comprising thiirane-functional polysulfide polymer of the invention to several substrates.

As an explanation for the good adhesion results, one by which Applicant does not wish to be bound, in scheme 1 the curing mechanism of the above thiirane compounds with an amine curing agent is illustrated.

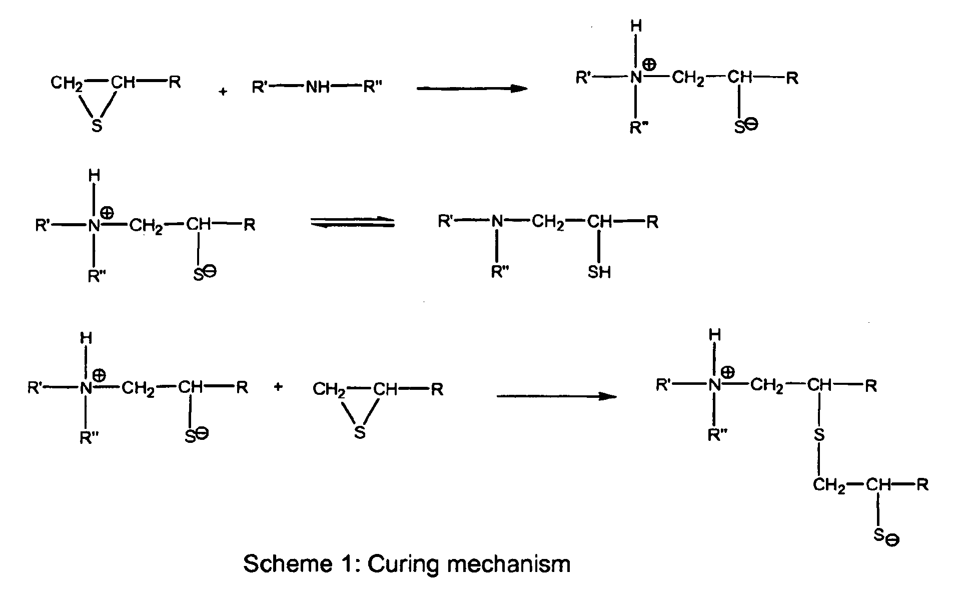

During curing the thiirane ring undergoes ring opening, which results in a thiol group. It is known that a thiol group has a higher affinity to react with metals than the hydroxyl group which is developed in epoxide curing (these reactions may result in a coordinative bond).

### (Comparative) Examples 3a-c - Pot life tests

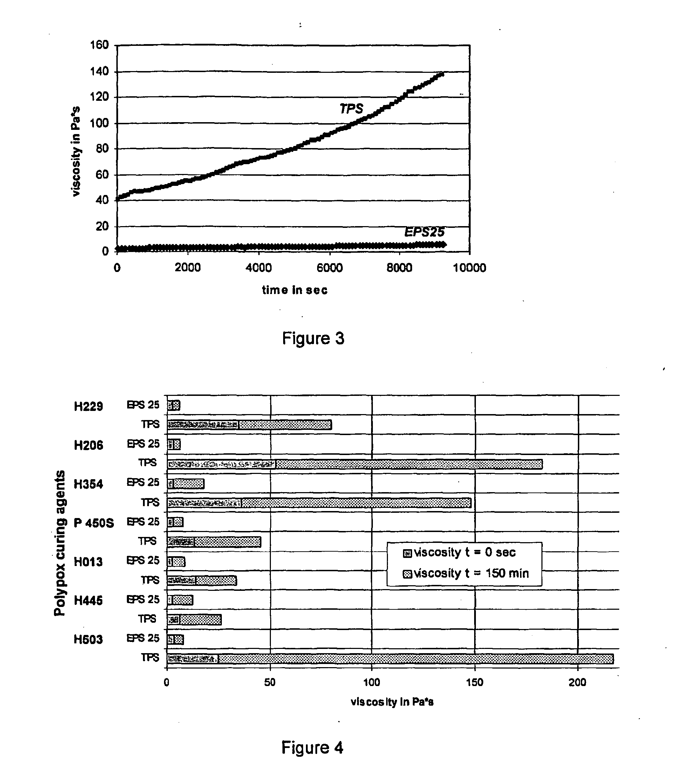

To compare the polysulfide polymers of the invention with the state of the art epoxy-terminated polysulfide polymers, pot life measurements (apparatus: Bohlin Rheometer CS50 of Bohlin Instruments) were performed using the TPS mixture from Preparation Example 1b (70% thiirane termination) and aliphatic polyamines and commercial amine mixtures as curing agents. For pot life measurements the polymer was mixed with the curing agent and the viscosity was monitored over a certain time range.
a) Pot life measurement with TPS polymer mixture of Example 1b and EPS 25 using triethylene tetramine (D.E.H™ 24 from DOW) as curing agent. 0.375 g triethylene tetramine was mixed with 10 g polymer.
   The results are represented in Figure 2.
b) Pot life measurement with TPS polymer mixture of Example 1b and EPS 25 using a modified aliphatic amine (Ancamine^{®} 1768 from Air Products) as curing agent. 1.6 g Ancamine 1768 were mixed with 10 g polymer.
   The results are represented in Figure 3.
c) Pot life measurement with TPS polymer mixture of Example 1b and EPS 25 using several commercial Polypox^{®} agents (from UPPC AG) as curing agent.
   The results are represented in Figure 4.

These Examples 3a to 3c show that the thiirane-functional polysulfide polymers according to the invention give an improved reactivity to curing agents while still having a sufficiently low viscosity.

### (Comparative) Examples 4 - Tensile Properties

To compare the polysulfide polymers of the invention with the state of the art epoxy-terminated polysulfide polymers and to ensure that the polysulfide polymers of this invention do not exhibit reduced tensile properties, several measurements were carried out. In all formulations the TPS polymer mixture presented in Example 1b was used.

**Table 2**

| | |
|---|---|
| Formulation A | 10 wt% TPS mixture, 65 wt% DGEBA resin (Epilox A 19-00, Leuna Harze) |
| Formulation B | 20 wt% TPS mixture, 55 wt% DGEBA resin (Epilox A 19-00, Leuna Harze) |
| Formulation C | 30 wt% TPS mixture, 45 wt% DGEBA resin (Epilox A 19-00, Leuna Harze) |
| Formulation D | 40 wt% TPS mixture, 35 wt% DGEBA resin (Epilox A 19-00, Leuna Harze) |
| Formulation A' | 10 wt% EPS 25, 65 wt% DGEBA resin (Epilox A 19-00, Leuna Harze) |
| Formulation B' | 20 wt% EPS 25, 55 wt% DGEBA resin (Epilox A 19-00, Leuna Harze) |
| Formulation C' | 30 wt% EPS 25, 45 wt% DGEBA resin (Epilox A 19-00, Leuna Harze) |
| Formulation D' | 40 wt% EPS 25, 35 wt% DGEBA resin (Epilox A 19-00, Leuna Harze) |

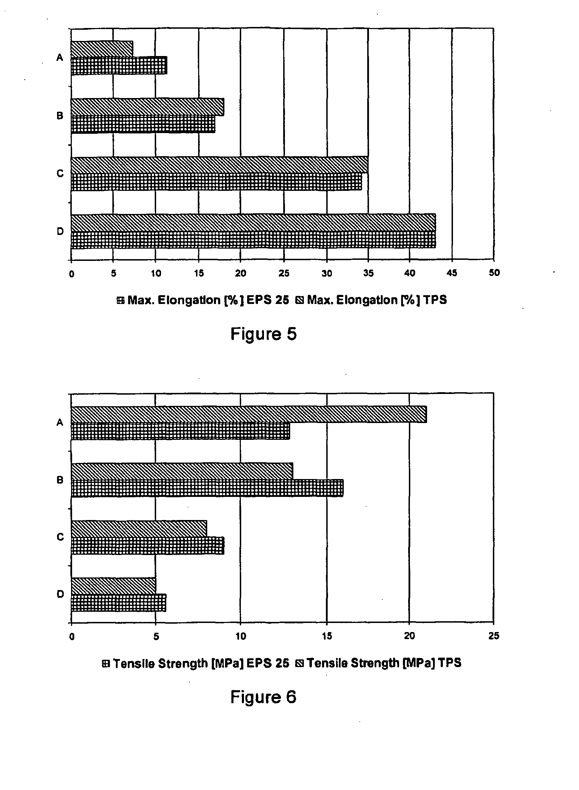

The formulations further contained filler, pigment, and a diluent where necessary. Aradur 2964 (from Huntsman) was used as curing agent. The tensile strength was tested on a TIRAtest 2410 of Tira Maschinenbau GmbH. The results are represented in Figures 5 and 6.

Figures 5 and 6 demonstrate the good tensile properties of the thiirane-functional polysulfide polymer of the invention in comparison to state of the art polysulfide polymers. In formulation A the thiirane polymer even has superior tensile properties.

### (Comparative) Example 5 - Thermoanalysis

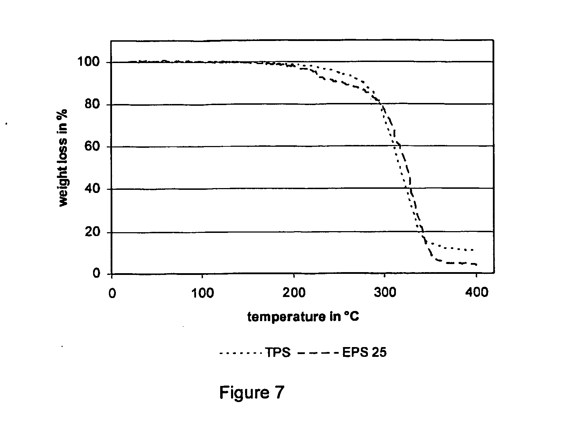

Figure 7 shows the thermogravimetric analysis (TGA) of the TPS polymer of Preparation Example 1b and EPS 25. The results found demonstrate that the thiirane-functional polysulfide polymers of the invention have a higher or prolonged thermal stability in comparison with the corresponding epoxy-functional polysulfide polymers.

1 % weight loss of EPS 25 was detected at 153°C, 1% weight loss of TPS with 70% thiirane termination was detected at 168°C.

## Claims

1. Thiirane-functional polysulfide polymer of the formula 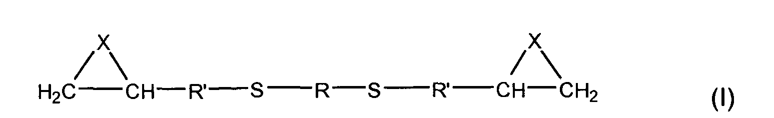 wherein R = the polysulfide polymer structure -(CH₂CH₂OCH₂OCH₂CH₂-SS)ₙ-CH₂CH₂OCH₂OCH₂CH₂-, n = 8-20, R' = CH₂ or DGEB A/F (diglycidyl ether of bisphenol A or F), X is O or S, with the proviso that at least one X is S.

2. Composition comprising the thiirane-functional polysulfide polymer of claim 1 and the corresponding epoxy-functional polysulfide polymer of formula (I), wherein X = O.

3. Composition of claim 2 wherein the weight ratio of thiirane-functional polysulfide polymer: epoxy-functional polysulfide polymer is between 1:4 and 4:1.

4. Process to prepare the composition of claim 2 and claim 3 wherein an epoxy-functional polysulfide polymer of formula (I) 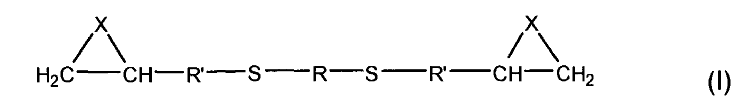 wherein R = the polysulfide polymer structure -(CH₂CH₂OCH₂OCH₂CH₂-SS)ₙ-CH₂CH₂OCH₂OCH₂CH₂-, n = 8-20, R' = CH₂ or DGEB A/F (diglycidyl ether of bisphenol A or F), and X is O, is reacted with thiourea or a thiocyanate ion-providing compound in the presence of a catalyst and a solvent for 2 to 15 hours at an elevated temperature.

5. Process of claim 4 wherein the thiocyanate ion-providing compound is selected from the group of thiocyanate salts, such as ammonium thiocyanate, potassium thiocyanate or sodium thiocyanate, ion exchange resins containing thiocyanate ions, and silica gels containing thiocyanate ions.

6. Process of claim 4 or 5 wherein the catalyst is selected from the group of organic acids and derivatives thereof.

7. Process of any one of claims 4 to 6 wherein the solvent is selected from the group of C₁-C₄ alkanols, C₁-C₄ dialkyl ketones, halogenated C₁-C₄ alkanes, and C₁-C₄ nitriles

8. Process according to any one of claims 4 to 7 wherein the reaction is performed under reflux conditions

9. Use of the polysulfide polymer of claim 1 or the composition of claim 2 or 3 in a coating, sealant or adhesive application.

10. Coating, adhesive or sealant composition comprising the thiirane-functional polysulfide polymer of claim 1, optionally an epoxy-functional polysulfide polymer, and a curing agent selected from the group of (poly)amines, (poly)amides, poly(thiols), (poly)alcohols, and mixtures thereof.

## Patentansprüche

1. Polysulfidpolymer mit Thiiran-Funktionalität der Formel 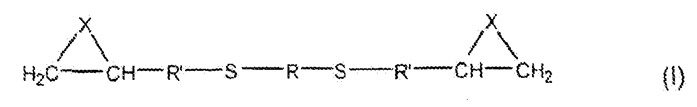 wobei R = die Polysulfidpolymerstruktur -(CH₂CH₂OCH₂OCH₂CH₂-SS)ₙ-CH₂CH₂OCH₂OCH₂CH₂-, n = 8-20, R' = CH₂ oder DGEB A/F (Diglycidylether von Bisphenol A oder F), X für O oder S steht, mit der Maßgabe, dass mindestens ein X für S steht.

2. Zusammensetzung umfassend das Polysulfidpolymer mit Thiiran-Funktionalität nach Anspruch 1 und das entsprechende Polysulfidpolymer mit Epoxy-Funktionalität der Formel (I), wobei X = O.

3. Zusammensetzung nach Anspruch 2, wobei das Gewichtsverhältnis des Polysulfidpolymers mit Thiiran-Funktionalität zum Polysulfidpolymer mit Epoxy-Funktionalität zwischen 1:4 und 4:1 liegt.

4. Verfahren zur Herstellung der Zusammensetzung nach Anspruch 2 und Anspruch 3, wobei ein Polysulfidpolymer mit Epoxy-Funktionalität der Formel (I) 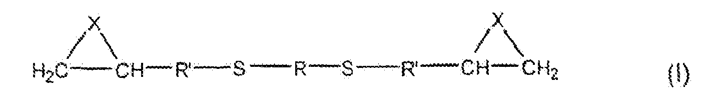 wobei R = die Polysulfidpolymerstruktur -(CH₂CH₂OCH₂OCH₂CH₂-SS)ₙ-CH₂CH₂OCH₂OCH₂CH₂-, n = 8-20, R' = CH₂ oder DGEB A/F (Diglycidylether von Bisphenol A oder F), und X für O steht, mit Thioharnstoff oder einer Verbindung, die Thiocyanationen bereitstellt, in Gegenwart eines Katalysators und eines Lösungsmittels über 2 bis 15 Stunden bei erhöhter Temperatur umgesetzt wird.

5. Verfahren nach Anspruch 4, wobei die Verbindung, die Thiocyanationen bereitstellt, aus der Gruppe von Thiocyanatsalzen, wie Ammoniumthiocyanat, Kaliumthiocyanat oder Natriumthiocyanat, Ionenaustauschharzen, die Thiocyanationen enthalten, und Kieselgelen, die Thiocyanationen enthalten, ausgewählt ist.

6. Verfahren nach Anspruch 4 oder 5, wobei der Katalysator aus der Gruppe von organischen Säuren und Derivaten davon ausgewählt ist.

7. Verfahren nach einem der Ansprüche 4 bis 6, wobei das Lösungsmittel aus der Gruppe von C₁-C₄-Alkanolen, C₁-C₄-Dialkylketonen, halogenierten C₁-C₄-Alkanen und C₁-C₄-Nitrilen ausgewählt ist.

8. Verfahren nach einem der Ansprüche 4 bis 7, wobei die Umsetzung unter Rückflussbedingungen ausgeführt wird.

9. Verwendung des Polysulfidpolymers nach Anspruch 1 oder der Zusammensetzung nach Anspruch 2 oder 3 in einer Beschichtung, einem Dichtungsmittel oder einem Klebstoffauftrag.

10. Beschichtungs-, Klebstoff- oder Dichtungszusammensetzung, umfassend das Polysulfidpolymer mit Thiiran-Funktionalität nach Anspruch 1, gegebenenfalls ein Polysulfidpolymer mit Epoxy-Funktionalität und einen Härter, ausgewählt aus der Gruppe von (Poly)aminen, (Poly)amiden, Poly(thiolen), (Poly)alkoholen und Gemischen davon.

## Revendications

1. Polymère de poly(sulfure) à fonctionnalité thiirane de formule 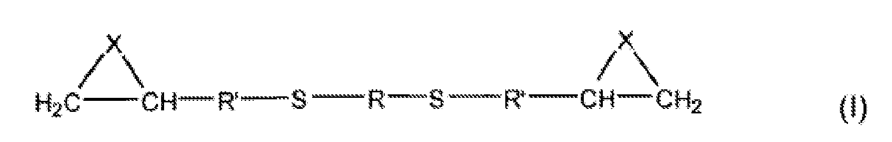 dans laquelle R = la structure de polymère de poly(sulfure) - (CH₂CH₂OCH₂OCH₂CH₂-SS)ₙ-CH₂CH₂OCH₂OCH₂CH₂-, n = 8 à 20, R' = CH₂ ou DGEB A/F (diglycidyl éther de bisphénol A ou F), X est O ou S, à condition qu'au moins un X soit S.

2. Composition comprenant le polymère de poly(sulfure) à fonctionnalité thiirane selon la revendication 1 et le polymère de poly(sulfure) à fonctionnalité époxy correspondant de formule (I), dans laquelle X = O.

3. Composition selon la revendication 2, dans laquelle le rapport en poids entre polymère de poly(sulfure) à fonctionnalité thiirane et polymère de poly(sulfure) à fonctionnalité époxy est compris entre 1 : 4 et 4 : 1.

4. Procédé pour préparer la composition selon la revendication 2 et la revendication 3, dans lequel un polymère de poly(sulfure) à fonctionnalité époxy de formule (I) 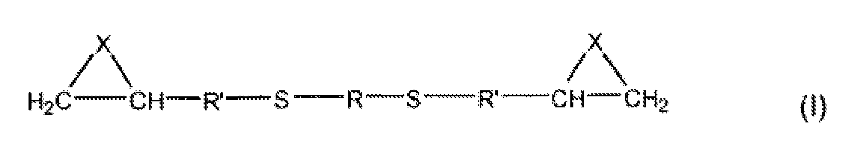 dans laquelle R = la structure de polymère de poly(sulfure) - (CH₂CH₂OCH₂OCH₂CH₂-SS)ₙ-CH₂CH₂OCH₂OCH₂CH₂-, n = 8 à 20, R' = CH₂ ou DGEB A/F (diglycidyl éther de bisphénol A ou F), et X est O, réagit avec de la thiourée ou un composé fournissant des ions thiocyanate en présence d'un catalyseur et d'un solvant pendant 2 à 15 heures à une température élevée.

5. Procédé selon la revendication 4, dans lequel le composé fournissant des ions thiocyanate est choisi dans le groupe consistant en les sels de thiocyanate, tels que le thiocyanate d'ammonium, le thiocyanate de potassium ou le thiocyanate de sodium, les résines échangeuses d'ions contenant des ions thiocyanate, et les gels de silice contenant des ions thiocyanate.

6. Procédé selon la revendication 4 ou 5, dans lequel le catalyseur est choisi dans le groupe consistant en les acides organiques et leurs dérivés.

7. Procédé selon l'une quelconque des revendications 4 à 6, dans lequel le solvant est choisi dans le groupe consistant en les alcanols en C₁ à C₄, les dialkylcétones en C₁ à C₄, les alcanes en C₁ à C₄ halogénés et les nitriles en C₁ à C₄.

8. Procédé selon l'une quelconque des revendications 4 à 7, dans lequel la réaction est réalisée dans des conditions de reflux.

9. Utilisation du polymère de poly(sulfure) selon la revendication 1 ou de la composition selon la revendication 2 ou 3, dans une application de revêtement, de mastic ou d'adhésif.

10. Composition de revêtement, d'adhésif ou de mastic comprenant le polymère de poly(sulfure) à fonctionnalité thiirane selon la revendication 1, facultativement un polymère de poly(sulfure) à fonctionnalité époxy, et un agent de durcissement choisi dans le groupe consistant en les poly(amines), les poly(amides), les poly(thiols), les poly(alcools) et leurs mélanges.
